(19) Europäisches Patentamt
European Patent Office
Office européen des brevets

(11) **EP 1 260 708 B1**

(12) **EUROPEAN PATENT SPECIFICATION**

(45) Date of publication and mention
of the grant of the patent:
**13.06.2007 Bulletin 2007/24**

(51) Int Cl.:
*F03D 5/02* *(2006.01)*   *F03D 7/02* *(2006.01)*

(21) Application number: **02011157.1**

(22) Date of filing: **21.05.2002**

(54) **Endless belt wind turbine**

Endlosbandwindturbine

Eoliénne à bande sans fin

(84) Designated Contracting States:
**AT BE CH CY DE DK ES FI FR GB GR IE IT LI LU
MC NL PT SE TR**

(30) Priority: **24.05.2001 IT TO20010492**

(43) Date of publication of application:
**27.11.2002 Bulletin 2002/48**

(73) Proprietors:
• **Marocco, Sergio**
  **27030 Frascarolo (PV) (IT)**
• **Geo S.r.l.**
  **10086 Settimo Torinese (IT)**

(72) Inventor: **Marocco, Sergio**
  **27030 Frascarolo (PV) (IT)**

(74) Representative: **Garavelli, Paolo**
  **A.BRE.MAR. S.R.L.,**
  **Via Servais 27**
  **10146 Torino (IT)**

(56) References cited:
  **WO-A-00/45048**   **WO-A-87/05079**
  **FR-A- 2 493 416**   **US-A- 4 049 300**
  **US-A- 4 134 469**   **US-A- 4 186 314**
  **US-A- 4 536 125**

## Description

The present invention refers to a static wind-propelled device, and in particular to a device that can operate as wind motor of the "static" type (since it has no moving members outside) to exploit the wind force in various types of drives.

Several device are known in the art that exploit the wind force as propulsor for various types of downstream motored applications, for example US-A-4049300, which discloses a device according to the preamble of claim 1, and US-A-4 186 314.

These devices, however, are not completely satisfactory, since they always require complex arrangements with high sizes (such as for example two- or three-blade devices of the mill type), that have very high costs compared with the energetic results that they finally obtain.

Object of the present invention is solving the above prior-art problems, by providing a static wind-propelled device that is of a simple arrangement, has very low costs and at the same time allows obtaining very high output powers for home or industrial applications.

A further object of the present invention is providing a device as stated above that can be applied correspondingly to any type of wind speed, adapting it in turn to even very high speeds, and that is realised in order not to be negatively affected by entering wind speeds, but on the contrary to exploit them at their best.

The above and other objects and advantages of the invention, as will appear from the following description, are obtained by a device as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:

- Figure 1 is a schematic side view of an embodiment of the device according to the present invention;
- Figure 2 is a detailed view of the device of Fig. 1;
- Figure 3 is a schematic side view of a possible variation of the device of Fig. 1; and
- Figure 4 is a detailed view of the device of Fig. 3.

With reference to the Figures, two possible embodiments of the static wind-propelled device 1 of the present invention are shown: it will readily appear to the skilled peoplein the art that such embodiments are purely a non-limiting example of the invention, since numerous variations are possible that take into account both the realisation of the single component parts, and the inclination angles that such parts have with respect to the wind direction.

As shown in the Figures, the device 1 of the invention exploits the wind energy by being simultaneously inserted in the environment without exposing moving members to the outside, such as for example the rotating blades of the current machines with horizontal axis, that are surely a danger for flying vehicles, in addition to be very costly and needing, for their installation, places that are as much as possible open and far away from inhabited areas. The device 1 of the invention, instead, exposes to the wind a stiff and compact section, whose size is preferably rectangular, inside which all moving members are wholly placed whose function is exploiting the wind energy. Its rectangular shape is adapted to best exploit the wind section, that is not completely exploited instead by the fans with horizontal axis, whose front side exposed to the wind has a circular shape. Due to its characteristic of not exposing moving members outside, this type of structure further works rather well when installed near inhabited areas, or inside them, for example on buildings roofs, or anyway in places that expose a rough profile to the wind.

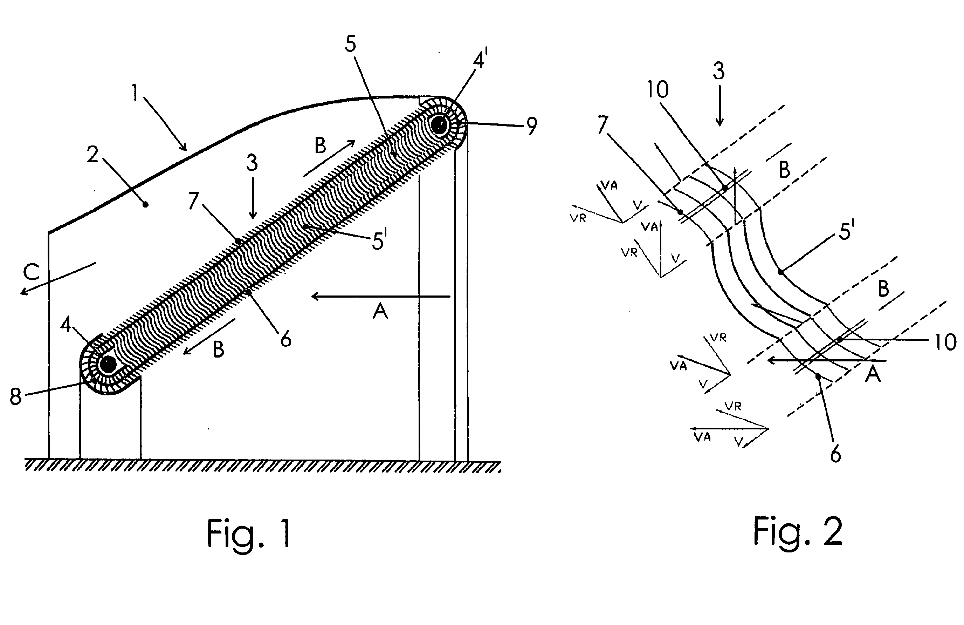

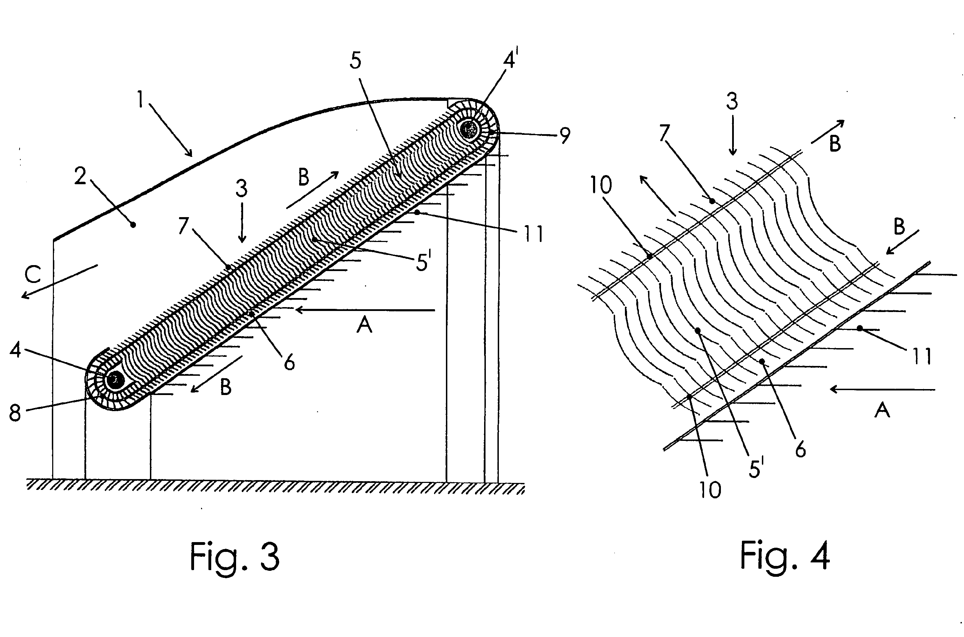

The device 1 of the invention, as shown in the Figures, has a support structure 2 that allows the wind to enter along direction A in the Figures and the wind to exit along direction C in Fig. 1 and 3. Inside the support structure 2 a moving member or propulsor element 3 is placed that is exposed to the wind action and is composed of a set of parallel elements 6, 7, whose section is equal or resembling an arc of circular crown and having as a feature very small sizes with respect to the length development (not shown since directed normally to the plane of the drawings). These elements 6, 7 will be hereinbelow referred to as "tongues" (even if they are not limited to such arrangement), and are equal, parallel and at the same distance one from the other, and globally form a closed loop, sliding under the wind action along a path that is characterised by two plane parallel sections mutually connected by two half-cylinder-shaped sections 8, 9.

Along this loop-shaped path, tongues 6, 7 (divided for clarity into a plurality of forward tongues 6 and a plurality of return tongues 7) are kept at the same distance and parallel one to the other by one or more support elements 10 that are flexible and inextensible (for example of the toothed belt or chain type), mutually equal and parallel, to which they are anchored so that they have no angular freedom along their sectional plane. Of these elements, obviously only one of them is shown in the Figures, that is the one that can be found in the plane of the figure. It is clear that the anchoring operation of the tongues 6, 7 to the support elements 10 is performed so that the longitudinal plane of symmetry of the tongues 6, 7 has, with respect to the wind direction, an angle that is chosen upon designing the device 1 in an optimum way according to the applications. This generally implies that also the sliding planes of the supports 10 next to the rectilinear part sections are slanted with respect to the wind direction, as can be seen in all the Figures.

The flexible support element 10 (moving along direction B in the Figures) is engaged, in the motion reversal areas 8, 9, with assemblies of two or more toothed pulleys 4, 4', at least one of which is able to transmit the mechanical power received by the tongues 6, 7 to a downstream user machine (not shown, for example an electric generator, a water scooping pump, etc.). Obviously, in the plane sections of the path, the support element 10 will have to be guided with low-friction systems (ball wheels, bushings or others) because in general the tongues 6,7 receive, from the air transiting through them, thrusts equipped with a non-null transverse component. The internal area of the tongue 6, 7 moving loop is occupied by fixed guide elements 5', geometrically of the same type as of the tongues 6, 7, whose purpose is allowing the passage of air from tongues 6 that are in the forward area to tongues 7 that are in the return area, with minimum energy leakages.

As regards the operation of the device 1 of the invention, Fig. 2 shows an enlarged section of the system with moving tongues 6, 7 and guide elements 5', in which vectors also appear that point out the air speed at the different passage planes between the tongues 6, 7 and the guide elements 5'. The air absolute speed (VA) and relative speed (VR) vector modulus, and the sliding speed (V) vector modulus of the tongues 6, 7 (graphically expressed in an arbitrary scale) in addition to their angles with respect to the transverse device 1 plane, are due to a theoretical computation, whose basic assumption is that the air volumetric flow rate is constant through all the device 1. Thereby all variations are neglected that deals with pressure, volumic mass and temperature, due to friction and parassite vorticities losses, and above all due to the working energy that the air transmits to tongues 6, 7, with consequent modification of its speed modulus between inlet and outlet.

The inventor also developed some formulas that take into account the above mentioned variations, based on the theory of stationary currents in fluids. It will be noted that the theoretical diagram shown in Fig. 2 is quite arbitrary as regards linear sizes of tongues 6, 7, in compliance with the previous basic assumption: if losses are neglected, the path length is not necessary for the computations. Obviously entry and exit angles of moving tongues 6, 7 and guide elements 5' are not arbitrary. They must necessarily be defined (in a different or equal way one to the other) so that the air speed is not subjected to angular variations when passing between the different members, such variations giving rise to vorticities. In the particular computation case whose results are included herein, the following hypotheses have been further made: a) the power subtracted to air by the return tongues 7 is equal to the power absorbed by the forward tongues 6. This has led to fixed guide elements 5' that are symmetrical with respect to the median device 1 plane, and to moving tongues 6, 7 with zero angle on their internal edge; b) the power given by the wind to the device 1 is, compatibly with hypothesis a), the maximum possible one: this has defined an optimum angle between median device 1 plane and horizon that is equal to 35°16'. As regards the power that can be obtained per wind section unit, in the chosen computation case the following formula is used:

$$P = 1/3 \ \eta \ \rho \ V^3$$

where:

ρ is the entry air density in kg/mc;
V is the wind speed in m/s; and
η is an efficiency coefficient.

Supposing, for example, ρ = 1.25 kg/mc and η = 0.7, the following very high power values are obtained with respect to the wind speed:

| V | 8 | 12 | 16 | 20 | m/s |
|---|---|---|---|---|---|
| P | 149.3 | 504.0 | 1194.7 | 2333.3 | W/m² |

Naturally, it is possible that a different computation setting takes to still better results. The previously-shown power values correspond to a balance situation between the sum of the thrusts exerted by the wind onto the tongues and the resisting torque (or torques) exerted in the exit areas of the structure 2. Let us now suppose that the user is disconnected. The tongues will start accelerating, keeping however the motion direction unchanged. Since also the wind direction is unchanged, at least at the beginning of the transient, the unavoidable consequence is a modulus decrease, and a direction modification as regards the relative air speed with respect to forward tongues 6. The direction modification in turn implies the presence of a relative speed component, that is normal to the tongue surface, that unavoidably creates vorticities, with following kinetic energy loss and pressure increase in the transit air. This phenomenon, that is repeated also in the other two downstream passages between moving and fixed tongues, makes the incoming wind encounter higher obstacles to its penetration into the device 1 and consequently starts being downwards deflected, tending to be parallel with the exposed device 1 surface. This further decreases the air flow rate through the device 1, and so on. At the end of the transient, the tongues will have reached a speed corresponding to an almost null working flow rate, that is the strictly necessary flow rate to compensate for internal wears. This no-load speed will be called "runaway speed".

If the user system is excluded, but requires less power than the rated one, the device 1 tends to accelerate, without reaching its runaway speed. This can be acceptable, though within certain limits (for example: dynamo supplying batteries or electrolytic baths), or cannot be acceptable (for example: alternator connected to mains). But it is anyway necessary to provide for an entry flow rate adjusting system.

A first possible adjusting arrangement (not shown) is providing that the whole structure 2 is installed on a platform that turns around a vertical axis, so that the platform, equipped with a suitable mechanisation, can be handled by operators or automatic systems to adjust its exposure to the wind. It will probably be suitable, in other cases, that the device 1 is able to be oriented by the same wind action, so that it anyway gives the wind its maximum working surface. In these cases, the adjustments will have to be given to another automatic member, as mentioned below. A similar rotating platform has without doubts less stability and safety problems with respect to orienting systems for large fans with horizontal axes.

A second adjusting system, as shown in Fig. 3 and 4, provides for the device 1 to be equipped at its entry (see Fig. 3 and 4) with a partitioning system composed of a plurality of tongues 11 able to be oriented and arranged along the device 1 surface that is directly exposed to the wind. If for example the machine will be used to supply alternators connected to the electric mains, a constant tongue speed must be ensured when the load changes. After having therefore discovered, based on environmental surveys, which is the most frequent wind speed in the installation area, the device 1 will have to be designed so that the rated power required to the plant corresponds to such speed (or to a reasonably lower speed if the periods of use have to be prolonged), and that, in case of stronger wind, the air flow rate is automatically decreased by differently orienting the tongues 11 of the partitioning system, or the rotating platform, or both.

In a second non-limiting example of use of such system, the device 1 can work within a given speed range (if a dynamo is used, for example). Instead of on the frequency, here the automatic device for actuating the partitioning tongues 11 can be based on the moving tongues speed, thereby operating in order to keep such speed within the range required by users characteristics.

A third adjusting system can finally provide for the possible variation of the slant of the device 1 front with respect to the horizon, making the device 1 itself rotatable around one of its horizontal axes, for example the lower one. This can be useful among others in case of exceptionally strong wind, to more or less "bend" the device 1 in order to reduce its front side exposed to the wind and the stresses to structure and foundations.

Some preferred embodiments of the present invention have been shown and described before: obviously, it will readily occur to the skilled people in the art that numerous variations and modifications, functionally equivalent to the previous ones, are possible and fall within the scope of the invention as pointed out by the enclosed Claims.

For example, a protection can be provied in the air exit area from the structure 2 from the direct wind action. This, if one one hand allows an undisturbed air exit from the device 1, on the other hand generates, as well known, a pressure increase in this area, that can be useful since also the air coming from the device 1, having lost its speed, depending on the already mentioned theory of stationary currents, certainly gains as regards density and pressure.

As further example, it can be provided that the device 1 of the invention is equipped with at least one wind speed sensor (not shown) and a user machine speed sensor (not shown), in order to arrange an electronic control and command part that, depending on detected speeds, allows orienting the device 1 in the most efficient way.

Moreover, it is possible to provide for a plurality of devices 1 as described above that are arranged both one over the other, and one beside the other in parallel, according to the applications.

Still further, the runaway speed can be used in the starting manoeuvres of the device 1, starting it at no-load till such speed is reached and then gradually inserting the users (for example through a clutch device) with the following gradual slowing of the device down to its operating speed.

## Claims

1. Static wind-propelled device (1) comprising:

   - a support structure (2) adapted to allow wind to enter and exit the device; and
   - a tongued propulsor element (3) placed inside said support structure (2) in such a way as to be passed through and kept moving by the wind, said propulsor element (3) being realised in a closed-loop configuration and rotating around at least one pair of toothed pulleys (4, 4') adapted to transmit energy to downstream user machines, said toothed pulleys (4, 4') being adapted to rotate around axes whose mutual position can be changed in a space-controlled way, said propulsor element (3) being placed around an internal air-transferring area (5) and being composed of a plurality of forward tongues (6), a plurality of return tongues (7) and at least two tongued reversal areas (8,9) adapted to mutually connect said forward tongues (6) and said return tongues (7);

**characterised in that** said device (1) is further equipped with a plurality of partitioning tongues (11) placed upstream of the plurality of forwad tongues (6) in such a way as to reduce the wind force entering into said device (1), said partitioning tongues (11) being adapted to be rotated in such a way as to provide a variable entry angle to the wind.

2. Device (1) according to Claim 1, **characterised in that** said plurality of forward tongues (6) and said plurality of return tongues (7) are supported by one or more closed-loop support elements (10) and are adapted to realise an angle that is different from 0° between their longitudinal plane of symmetry and the entering and exiting wind direction.

3. Device (1) according to Claim 2, **characterised in that** the angle formed by the longitudinal plane of symmetry of the forward tongues (6) and the entering wind direction is different from the angle formed by the longitudinal plane of symmetry of the return tongues (7) with the exiting wind direction.

4. Device (1) according to Claim 1, **characterised in that** said internal air transferring area (5) is equipped with a plurality of guide elements (5') whose longitudinal plane of symmetry forms an angle different from 0° with the entering wind direction.

5. Device (1) according to Claim 2, 3 or 4, **characterised in that** the angles formed by the longitudinal axes of forward tongues (6), return tongues (7) and guide elements (5') with the wind direction are all respectively different one from the other.

6. Device (1) according to any one of the previous Claims,
**characterised in that** said structure (2) is installed on a platform turning around a vertical axis, so that said structure (2) can be oriented in such a way as to show to the wind its maximum working surface, or to decrease its exposure in case of strong wind.

7. Device (1) according to any one of the previous Claims, **characterised in that** the angle between the median plane of the device (1) and the horizon is varying and adjustable depending on wind force and user needs.

8. Device (1) according to any one of the previous Claims, **characterised in that** said device (1) is adapted to change the slanting of its front side with respect to the horizon, the device (1) being turnable around one of its horizontal axes, for example the lower axis.

9. Device (1) according to any one of the previous Claims, **characterised in that** it is further equipped with at least one wind speed sensor and one user machine speed sensor, said device (1) being driven and controlled by an electronic control and command part that, depending on detected speeds, allows automatically adjusting the device (1) according to the applications.

10. Device (1) according to any one of the previous Claims, **characterised in that** it is adapted to be used operatively stacked onto other devices (1) of the same type.

11. Device (1) according to any one of Claims 1 to 10, **characterised in that** it is used operatively beside and in parallel with other devices (1) of the same type.


**Patentansprüche**

1. Statische Windangetriebene (1) Vorrichtung, die einschließt:

    - eine Trägerstruktur (2), die den Ein- und Ausgang des Windes ermöglicht; und
    - ein Antriebselement mit Flügeln (3), das sich innerhalb der genannten Trägerstruktur (2) befindet, um vom Wind durchquert und in Bewegung gehalten zu werden, das genannte Antriebselement (3) ist in einer geschlossenen Ringkonfiguration realisiert und dreht sich um mindestens ein Paar verzahnter Riemenscheiben (4, 4'), die darunter liegenden Verbrauchermaschinen Energie übermitteln sollen, die genannten Riemenscheiben (4, 4') dienen dazu, um Achsen herumzudrehen, deren gegenseitige Position man durch Steuerung im Raum ändern kann, das genannte Antriebselement (3) ist um den inneren Luftübertragungsbereich (5) herum angebracht und besteht aus mehreren Vorlauf- (6) und mehreren Rücklaufrippen (7) und mindestens zwei Umkehrbereichen mit Rippen (8, 9), die die genannten Vorlauf- (6) und die genannten Rücklaufrippen (7) miteinander verbinden sollen;

die genannte Vorrichtung (1) ist außerdem mit mehreren Teilrippen (11) ausgestattet, die oberhalb der vielen Vorlaufrippen (6) angebracht sind, um die Windstärke am Eingang der genannten Vorrichtung (1) zu reduzieren, die genannten Teilrippen (11) dienen dazu, gedreht zu werden, um dem Wind einen variablen Eingangswinkel zu bieten.

2. Vorrichtung (1) gemäß Patentanspruch 1, die **dadurch gekennzeichnet ist, dass** die vielen Vorlauf- (6) und die vielen Rücklaufrippen (7) von einem oder mehreren Trägerelementen (10) mit geschlossenem Ring getragen werden und dazu dienen, einen anderen Winkel als 0° zwischen ihrer longitudinalen Symmetriefläche und der Windein- und ausgangsrichtung zu bilden.

3. Vorrichtung (1) gemäß Patentanspruch 2, die **dadurch gekennzeichnet ist, dass** der von der longitudinalen Symmetriefläche der Vorlaufrippen (6) und von der Windeingangsrichtung gebildete Winkel anders als der von der longitudinalen Symmetriefläche der Rücklaufrippen (7) und der Windausgangsrichtung gebildete Winkel ist.

4. Vorrichtung (1) gemäß Patentanspruch 1, die **dadurch gekennzeichnet ist, dass** der genannte innere Luftübertragungsbereich (5) mit mehreren Führungselementen (5') ausgestattet ist, deren longitudinale Symmetriefläche mit der Windeingangsrichtung einen anderen Winkel als 0° bildet.

5. Vorrichtung (1) gemäß Patentanspruch 2, 3 oder 4, die **dadurch gekennzeichnet ist, dass** die von den longitudinalen Achsen der Vorlaufrippen (6), der Rücklaufrippen (7) und der Führungselemente (5') mit der Windrichtung gebildeten Winkel alle untereinander verschieden sind.

6. Vorrichtung (1) gemäß einem beliebigen der vorhergehenden Patentansprüche, die **dadurch gekennzeichnet ist, dass** die genannte Struktur (2) auf einer um eine vertikale Achse drehbaren Plattform installiert ist, so dass die genannte Struktur (2) so ausgerichtet werden kann, dass sie dem Wind die maximale Nutzfläche zeigt oder dass sie bei starkem Wind die Exposition vermindert.

7. Vorrichtung (1) gemäß einem beliebigen der vorhergehenden Patentansprüche, die **dadurch gekennzeichnet ist, dass** der Winkel zwischen der mittleren Fläche der Vorrichtung (1) und dem Horizont je nach der Windstärke und den Anforderungen des Benutzers geändert und eingestellt werden kann.

8. Vorrichtung (1) gemäß einem beliebigen der vorhergehenden Patentansprüche, die **dadurch gekennzeichnet ist, dass** die genannte Vorrichtung (1) dazu dient, die Neigung ihrer Vorderseite gegenüber dem Horizont zu ändern, die Vorrichtung (1) dreht sich um eine ihrer horizontalen Achsen, zum Beispiel um die untere.

9. Vorrichtung (1) gemäß einem beliebigen der vorhergehenden Patentansprüche, die **dadurch gekennzeichnet ist, dass** sie außerdem mit mindestens einem Windgeschwindigkeitssensor und einem Geschwindigkeitssensor der Verbrauchermaschine ausgestattet ist, die genannte Vorrichtung (1) wird durch einen elektronisch kontrollierten und gesteuerten Teil überwacht, der je nach den festgestellten Geschwindigkeiten die automatische Einstellung der Vorrichtung (1) gemäß den Anwendungen ermöglicht.

10. Vorrichtung (1) gemäß einem beliebigen der vorhergehenden Patentansprüche, die **dadurch gekennzeichnet ist, dass** sie dazu dient, operativ auf andere Vorrichtungen (1) der gleichen Art gestapelt und verwendet zu werden.

11. Vorrichtung (1) gemäß einem beliebigen der Patentansprüche von 1 bis 10, die **dadurch gekennzeichnet ist, dass** sie dazu dient, operativ neben und parallel zu anderen Vorrichtungen (1) der gleichen Art verwendet zu werden.


**Revendications**

1. Dispositif statique à propulsion éolienne (1) comprenant:

 - une structure de support (2) capable de permettre l'entrée et la sortie du vent; et
 - un élément propulseur à ailettes (3) placé à l'intérieur de ladite structure de support (2) de manière à être traversé et maintenu en mouvement par le vent, ledit élément propulseur (3) étant réalisé en une configuration en boucle fermée et tournant autour d'au moins une paire de poulies dentées (4, 4') aptes à transmettre l'énergie aux machines utilisatrices en aval, lesdites poulies dentées (4, 4') étant capables de tourner autour d'axes dont on peut faire varier la position réciproque à travers une commande dans l'espace, ledit élément propulseur (3) étant placé autour d'une zone interne de transfert de l'air (5) et étant constitué d'une pluralité d'ailettes d'aller (6), d'une pluralité d'ailettes de retour (7) et d'au moins deux zones d'inversion à ailettes (8, 9) capables d'interconnecter lesdites ailettes d'aller (6) et lesdites ailettes de retour (7);

**caractérisé en ce que** ledit dispositif (1) est encore muni d'une pluralité d'ailettes d'étranglement (11) placées en amont de la pluralité d'ailettes d'aller (6) de manière à réduire la force du vent en entrée dans ledit dispositif (1), lesdites ailettes d'étranglement (11) pouvant être faites tournées de manière à offrir un angle variable d'entrée au vent.

2. Dispositif (1) suivant la revendication 1, **caractérisé en ce que** ladite pluralité d'ailettes d'aller (6) et ladite pluralité d'ailettes de retour (7) sont supportées par un ou plusieurs éléments de support (10) à boucle fermée et sont capables de réaliser un angle différent de 0° entre leur plan de symétrie longitudinale et la direction du vent en entrée et en sortie.

3. Dispositif (1) suivant la revendication 2, **caractérisé en ce que** l'angle formé par le plan de symétrie longitudinale des ailettes d'aller (6) et par la direction du vent en entrée est différent de l'angle formé par le plan de symétrie longitudinale des ailettes de retour (7) avec la direction du vent en sortie.

4. Dispositif (1) suivant la revendication 1, **caractérisé en ce que** ladite zone interne de transfert de l'air (5) est pourvue d'une pluralité d'éléments de guidage (5') et dont le plan de symétrie longitudinale forme, avec la direction du vent en entrée, un angle différent de 0°.

5. Dispositif (1) suivant la revendication 2, 3 ou 4, **caractérisé en ce que** les angles formés par les axes longitudinaux des ailettes d'aller (6), des ailettes de retour (7) et des éléments de guidage (5') avec la direction du vent sont tous respectivement différents entre eux.

6. Dispositif (1) selon une quelconque des revendications précédentes, **caractérisé en ce que** ladite structure (2) est installée sur une plate-forme pivotante autour d'un axe vertical, pour que ladite structure (2) puisse être orientée de manière à présenter le maximum de surface utile au vent, ou diminuer l'exposition en cas de vent fort.

7. Dispositif (1) selon une quelconque des revendications précédentes, **caractérisé en ce que** l'angle entre le plan médian du dispositif (1) et l'horizon est variable et réglable en fonction de la force du vent et des exigences de l'utilisateur.

8. Dispositif (1) selon une quelconque des revendications précédentes, **caractérisé en ce que** ledit dispositif (1) est capable de varier l'inclinaison de sa propre face par rapport à l'horizon, le dispositif (1) pouvant pivoter autour d'un des axes horizontaux, l'axe inférieur par exemple.

9. Dispositif (1) selon une quelconque des revendications précédentes, **caractérisé en ce qu'**il est aussi pourvu d'au moins un capteur de la vitesse du vent et d'un capteur de vitesse de la machine utilisatrice, ledit dispositif (1) étant commandé et contrôlé par une partie électronique de contrôle et de commande qui permet, en fonction des vitesses relevées, le réglage automatique du dispositif (1) selon les applications.

10. Dispositif (1) selon une quelconque des revendications précédentes, **caractérisé en ce qu'**il est peut être fonctionnellement utilisé empilé à d'autres dispositifs (1) du même type.

11. Dispositif (1) selon une quelconque des revendications de 1 à 10, **caractérisé en ce qu'**il est fonctionnellement utilisé placé côte à côte ou en parallèle à d'autres dispositifs (1) du même type.

Fig. 2

Fig. 1

8

Fig. 3

Fig. 4

**EP 1 260 708 B1**

**REFERENCES CITED IN THE DESCRIPTION**

**Patent documents cited in the description**

- US 4049300 A

- US 4186314 A